Europäisches Patentamt

European Patent Office

Office européen des brevets

(11) Veröffentlichungsnummer : **0 105 304**
**B1**

(12) **EUROPÄISCHE PATENTSCHRIFT**

(45) Veröffentlichungstag der Patentschrift :
22.10.86

(21) Anmeldenummer : 83901196.2

(22) Anmeldetag : 14.04.83

(86) Internationale Anmeldenummer :
PCT/EP 83/00105

(87) Internationale Veröffentlichungsnummer :
WO/8303693 (27.10.83 Gazette 83/25)

(51) Int. Cl.⁴ : **G 06 K 17/00**, G 06 K   7/10,
G 03 B 21/11

(54) **MIKROFILMLESEGERÄT.**

(30) Priorität : 14.04.82 DE 3213769

(43) Veröffentlichungstag der Anmeldung :
18.04.84 Patentblatt 84/16

(45) Bekanntmachung des Hinweises auf die Patenterteilung : 22.10.86 Patentblatt 86/43

(84) Benannte Vertragsstaaten :
AT BE CH DE FR GB LI LU NL SE

(56) Entgegenhaltungen :
EP-A- 0 004 852
EP-A- 0 013 634
DE-A- 2 004 937
DE-A- 2 816 301
DE-A- 2 825 755
FR-A- 2 048 050
FR-A- 2 226 903
GB-A- 1 579 111
US-A- 3 936 596
US-A- 4 043 652
IBM Technical Disclosure Bulletin, vol. 20, no. 7,
December 1977, New York (US) G.J. Laurer: "Optical
Reading Wand", page 2786
IBM Technical Disclosure Bulletin, vol. 8, no. 4,
September 1965, New York (US) J.J. Kennedy :
"Variable threshold Control", pages 692, 693

(73) Patentinhaber : DATRONIC GESELLSCHAFT FÜR
INFORMATIONSVERARBEITUNG MBH
Piechlerstrasse 1
D-8902 Neusäss (DE)

(72) Erfinder : GROSSMANN, Richard
Jesuitengasse 3
D-8900 Augsburg (DE)
Erfinder : MAYER, Gerhard
Am Kirchenweg 21a
D-8901 Stadtbergen (DE)
Erfinder : RÜDINGER, Otto
Schillerstrasse 4
D-8902 Neusäss (DE)

(74) Vertreter : Prüfer, Lutz H., Dipl.-Phys.
Harthauser Strasse 25d
D-8000 München 90 (DE)

**Beschreibung**

Die Erfindung betrifft ein Mikrofilmlesegerät mit einem Bildschirm und einer einen zu lesenden Mikrofilm auf den Bildschirm abbildenden Abbildungseinrichtung und einem mit einem mit einer Datenverarbeitungseinrichtung verbindbaren Decoder verbundenen Scanner zum Erfassen von auf dem Mikrofilm aufgezeichneter Information.

Ein Mikrofilmlesegerät ist aus der DE-AS 24 50 076 bekannt. Wird mit einem derartigen Lesegerät beispielsweise ein Mikrofilm über Lagerteile in einer Kraftfahrzeugwerkstätte betrachtet, dann entnimmt die Bearbeitungsperson dem Mikrofilm die EDV-Nummer und tippt diese in eine Datenverarbeitungsanlage ein. Das ist arbeitsaufwendig und stellt eine Fehlerquelle dar.

Aus der US-PS 3 936 596 ist ein Mikrofilmlesegerät bekannt, bei dem neben dem Mikrofilm auch eine codierte Information auf den Sichtschirm projiziert wird. Die codierte Information wird hier allerdings mit einer aufwendigen Kamera- und Codiereinrichtung gelesen.

Aus der GB-PS 12 57 143 ist es bekannt, mittels eines Lesestiftes einen eine Ware kennzeichnenden Code zu erfassen. Der Lesestift erzeugt ein Ausgangssignal, welches über einen Decoder an eine Datenverarbeitungseinrichtung gegeben wird.

Aus dem DE-GM 80 26 120 ist es bekannt, auf einem Mikrofilm einen Strichcode vorzusehen. Ferner ist aus dieser Druckschrift eine Vorrichtung zum optischen Abtasten eines Strichcodes bekannt, bei der mittels einer Lichtquelle ein auf einem Mikrofilm vorgesehener Strichcode auf eine Photodiode projiziert wird.

Aufgabe der Erfindung ist es, ein Mikrofilmlesegerät der eingangs beschriebenen Art zu schaffen, welches so ausgebildet ist, daß obige Nachteile vermieden werden. Insbesondere soll es ermöglicht werden, die auf dem Bildschirm erscheinende Information bzw. eine diese Information kennzeichnende Information automatisch bei den jeweils auf dem Bildschirm herrschenden Kontrastverhältnissen in eine Datenverarbeitungseinrichtung zu übertragen, so daß Übertragungsfehler vermieden werden.

Diese Aufgabe wird durch ein Mikrofilmlesegerät der eingangs beschriebenen Art gelöst, welches gemäß der Erfindung dadurch gekennzeichnet ist, daß der Scanner als Lesestift ausgebildet ist, der die Information auf dem Bildschirm abtastet, daß ein Verstärker zum Verstärken des Ausgangssignales des Lesestiftes in Abhängigkeit von dem Kontrastverhältnis auf dem Bildschirm vorgesehen ist und daß der Lesestift eine Kontrastmeßeinrichtung zum Erfassen des Bildschirmkontrastes und Liefern entsprechender Ausgangssignale an den Verstärker aufweist.

Weitere Merkmale und Zweckmäßigkeiten der Erfindung ergeben sich aus der Beschreibung von Ausführungsbeispielen anhand der Figuren. Von den Figuren zeigen :

Figur 1 einen Ablaufplan eines Verfahrens zur Herstellung eines Mikrofilms mit schematischer Darstellung der einzelnen Stationen ;

Figur 2 ein Lesegerät mit einem Lesestift gemäß einer Ausführungsform ;

Figur 3 eine abgewandelte Ausführungsform mit einem Blockschaltbild einer Ausführungsform und

Figur 4 eine schematische Darstellung eines Schnittes durch ein Lesegerät.

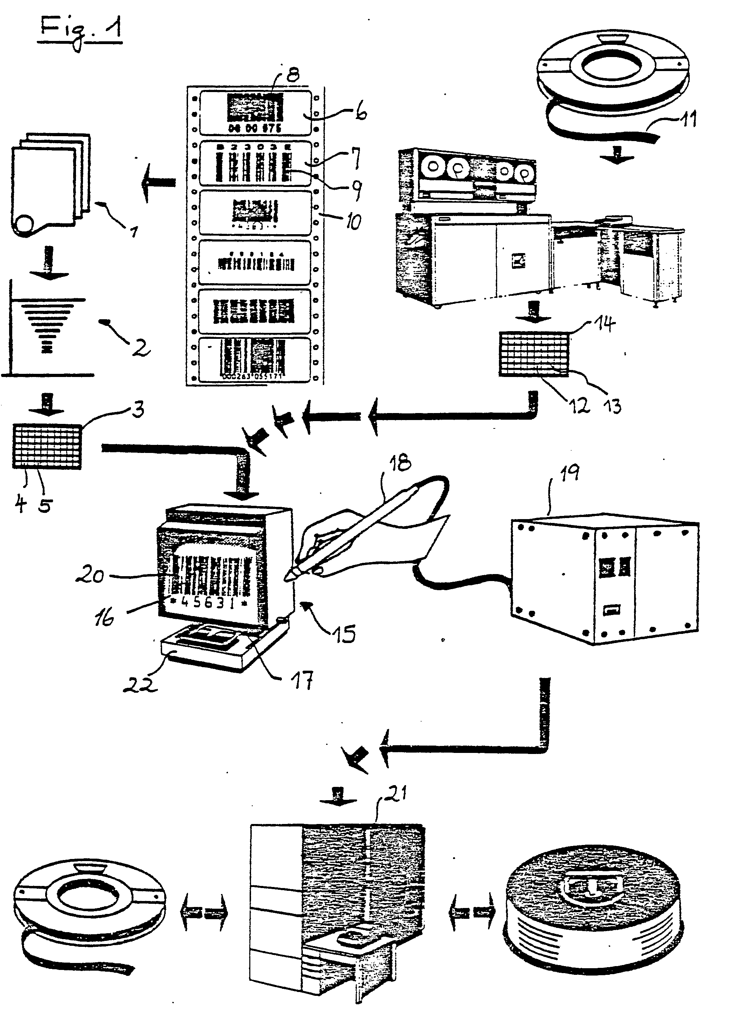

Es wird zunächst die Herstellung eines hier zu verwendenden Mikrofilms unter Bezugnahme auf die Figur 1 erläutert. Eine Mehrzahl von Vorlagen 1 mit alphanumerischer Information und/oder Bildinformationen wird zunächst mittels einer Kamera 2 mikroverfilmt, indem ein bzw. mehrere Fiches 3 erstellt werden, die auf einer Mehrzahl von Feldern 4, 5 die Information der Vorlagen tragen. Damit die einzelnen Felder 4, 5 jeweils eine die Vorlage 1 kennzeichnende Information in Form eines Strichcodes aufweisen, werden vor der Verfilmung auf jeder Vorlage beispielsweise selbstklebend ausgebildete Etiketten 6, 7 aufgebracht, auf die Strichcodes 8, 9 aufgedruckt sind. Diese Etiketten können auf einem Papierstreifen 10 in Form einer Rolle angeordnet sein. Nach dem Erstellen des Mikrofilmes bzw. Mikrofiches 3 weist dann jedes einer jeweiligen Vorlage entsprechendes Informationsfeld 4, 5 einen der Information zugeordneten Strichcode 8, 9 auf.

Bei einem anderen Ausführungsbeispiel der Herstellung erfolgt die Mikroverfilmung direkt vom Magnetband 11. In diesem Fall werden die jeder Information zugeordneten Strichcodeinformationen in digitaler Form auf Magnetband gespeichert, so daß bei der Computer-Output-Mikrofilmerstellung auf jedem Informationsfeld 12, 13 entsprechende dem Informationsinhalt der Felder 12, 13 zugeordnete Strichcodes generiert werden.

Zum Auswerten bzw. Auslesen des Mikrofilmes bzw. der Mikrofiches 2, 14 ist ein Lesegerät 15 vorgesehen. Dieses weist in bekannter Weise einen Bildschirm 16, eine Auflage 17 zur Aufnahme des zu lesenden Mikrofilmes und eine nicht gezeigte Abbildungseinrichtung zum Abbilden eines aufgelegten Mikrofilmes auf den Schirm in vergrößerter Darstellung auf. Das Mikrofilmlesegerät weist zusätzlich einen optoelektronischen Lesestift 18 auf, der mit seinem Ausgang in bekannter Weise mit einem schematisch dargestellten Decoder 19 verbunden ist, dessen Ausgang mit einer Datenverarbeitungseinrichtung verbindbar ist.

Wird nun die Information eines bestimmten Informationsfeldes 4, 5 bzw. 12, 13 auf dem Bildschirm abgebildet und soll die diese Information kennzeichnende Information an eine Datenverarbeitungsanlage weitergegeben werden, dann wird der zugeordnete Strichcode 20 mit dem Lesestift 18 abgetastet und über den Decoder 19 einer schematisch angedeuteten Datenverarbeitungseinrichtung 21 zugeführt. In dieser erfolgt eine gewünschte Weiterverarbeitung.

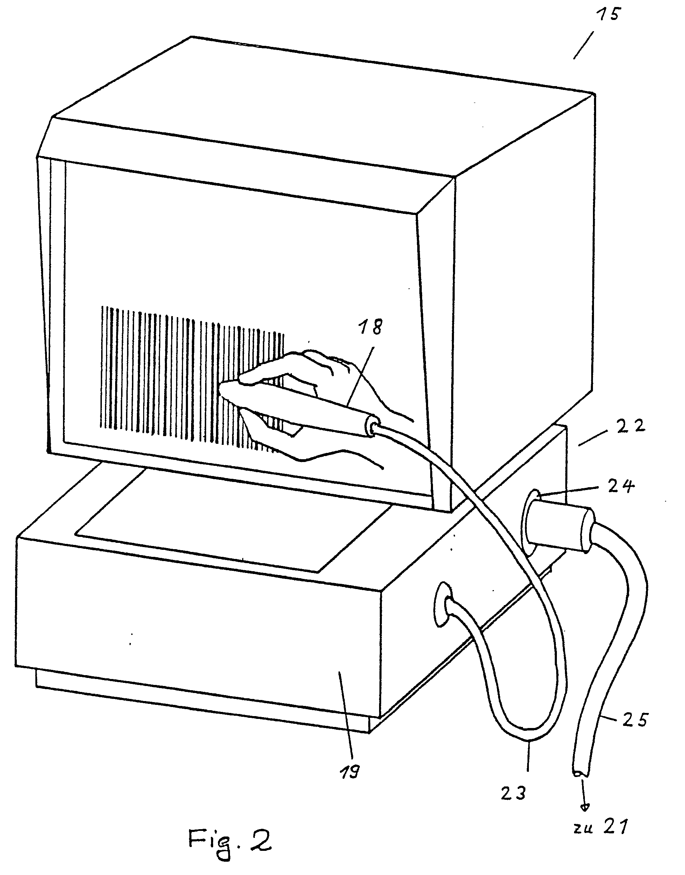

Gemäß der in Figur 2 gezeigten Ausführungsform ist der Decoder 19 in dem Sockel 22 des Lesegerätes 15 untergebracht. Der Lesestift 18 ist dann über eine Leitung 23 mit dem in dem Sockel 22 vorgesehenen Decoder 19 verbunden und damit Teil des Lesegerätes selbst. Der Ausgang des Decoders ist auf eine Buchse 24 gelegt, in die ein zu der Datenverarbeitungseinrichtung 21 führendes Kabel 25 einsteckbar ist.

Es ist zu beachten, daß bei Mikrofilmen und insbesondere bei der Projektion von Mikrofilmen auf Bildschirme die Intensitätsunterschiede zwischen den Strichen und den dazwischen vorgesehenen Zwischenräumen wesentlich geringer sind als bei üblichen Strichcodes. Aus diesem Grunde hat der zur Verstärkung der Strichcodesignale vorgesehene Verstärker 26 eine Verstärkerkennlinie, die so steil verläuft, daß die Strichcodesignale eindeutig erfaßt werden können.

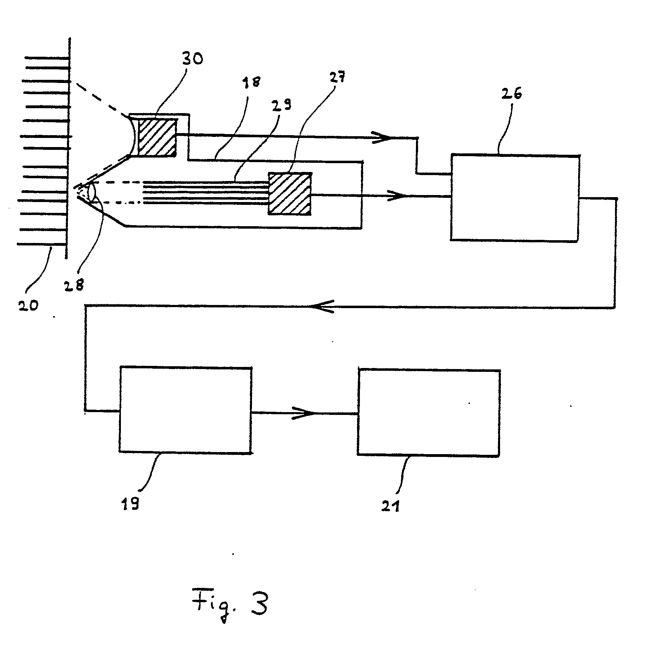

In Figur 3 ist eine Ausführungsform eines Lesestiftes und das Blockschaltbild einer Schaltung zur Auswertung der Lesestiftsignale gezeigt. Der Lesestift enthält ein Lichtsensorelement 27, z. B. eine Photodiode, dem über eine Optik 28 und gegebenenfalls eine Lichtleiterfaser 29 die Helligkeitsinformation zugeführt wird. Das Lichtsensorelement 27 ist über eine Leitung mit dem Verstärker 26 verbunden. Der Lesestift weist ferner ein Kontrastmeßelement 30 zur Bestimmung des Kontrastverhältnisses auf dem Bildschirm, d. h. zur Bestimmung der Intensitätsunterschiede zwischen den Strichen und den dazwischen vorgesehenen Zwischenräumen, auf. Das Kontrastmeßelement 30 ist ebenfalls mit dem Verstärker 26 verbunden und steuert die Verstärkerkennlinie des Verstärkers so, daß diese umso steiler wird, je kontrastärmer die auf den Bildschirm projizierte Strichcodeinformation erscheint. Auf diese Weise ist die zuverlässige Erfassung der einem Strichcode 20 entsprechenden Signale gewährleistet.

Der Verstärker 26 ist in üblicher Weise mit einem Decoder 19 und dieser mit einer Datenverarbeitungseinrichtung 21 verbunden. Der Decoder 19 wandelt die strichcodierte Information des Strichcodes 20 um in digitale Information für die weitere EDV-mäßige Verarbeitung mittels der Datenverarbeitungseinrichtung 21. Bevorzugt geschieht die Umwandlung in digitale Information so, daß diese digitale Information in einer genormten Form (z. B. V24) bereitgestellt wird. In diesem Fall ist ein vielseitiger Einsatz des Lesegerätes durch die einfache Kopplungsmöglichkeit mit anderen Datenverarbeitungsanlagen gegeben, so daß z. B. eine automatische Ausgabe eines Ersatzteilpreises, eine automatische Rechnungserstellung, eine automatische Teileausgabe oder eine automatische Lagerhaltung erfolgen kann.

Gemäß einer weiteren Ausführungsform der Erfindung kann der Lesestift selektiv farbige Strichcodeinformationen erfassen. Dies geschieht vorzugsweise dadurch, daß entsprechende Farbfilter in den Strahlengang des Lesestiftes eingeschwenkt werden. In diesem Falle ist es z. B.

möglich, bei entsprechender Kopplung des Einschwenkmechanismus mit der Datenverarbeitungsanlage selektiv bestimmte Kategorien von Information in der Datenverarbeitungseinrichtung automatisch ohne Auswertung des Dateninhalts zu erfassen.

Gemäß einer anderen Ausführungsform der Erfindung spricht das Lichtsensorelement 27 selektiv auf infrarote Strahlung an.

In den obigen Ausführungsbeispielen wurde in jedem Informationsfeld jeweils eine zusätzliche Strichcodeinformation aufgebracht. Diese kann gewünschtenfalls aus mehreren Informationsgruppen bestehen und die alphanumerische und/oder Bildinformation in verschiedener Hinsicht oder aber verschiedene Teile dieser Information kennzeichnen, ebenso wie sie auch für sich allein stehen kann.

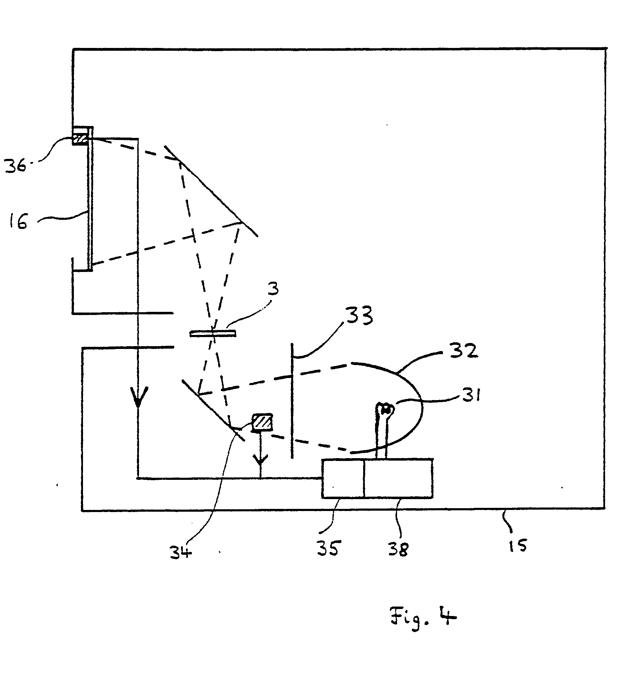

Bei der in Figur 4 gezeigten Ausführungsform weist das Mikrofilmlesegerät eine Lampe 31 als Lichtquelle auf, die einen Fokussierspiegel 32 aufweist. Damit der abzubildende Mikrofiche 3 so wenig wie möglich beim Abbilden erwärmt wird und andererseits der Lesestift doch mit genügend Energie in dem optimalen Ansprechbereich des Lichtsensorelementes 27 beaufschlagt wird, ist der Fokussierspiegel 32 derart belegt, daß er nur bis zu einem Wellenlängenbereich reflektiert, welcher unmittelbar nach dem optimalen oder auch maximalen Wellenlängen-Ansprechbereich des Lichtsensorelementes 27 endet. Ferner ist in dem Strahlengang vor dem abzubildenden Mikrofiche ein Filter 33 vorgesehen, der in einem Wellenlängenbereich absorbiert, welcher zwischen etwa 0,6 $\mu$m und dem optimalen bzw. maximalen Wellenlängenansprechbereich des Lichtsensorelementes 27 liegt. In einem Fall, in dem das Lichtsensorelement eine Siliziumphotodiode ist, liegt der Absorptionsbereich des Filters 33 zwischen dem Wellenlängenbereich von etwa 0,65 und 0,75 $\mu$m. Grundsätzlich ist es auch möglich, den Fokussierspiegel so auszubilden, daß er die Filterwirkung des Filters 33 aufweist.

Wie weiter aus Figur 4 ersichtlich ist, ist im Strahlengang ein erster Leuchtdichtesensor 34 vorgesehen, der so angeordnet ist, daß er mit Licht beaufschlagt wird, welches nicht durch den Mikrofiche 3 gegangen ist. Das Ausgangssignal dieses Leuchtdichtesensors 34 wird einer Regeleinrichtung 35 zugeführt, deren Ausgangssignal der Spannungsversorgung 38 der Lampe 31 zugeführt wird. Die Regeleinrichtung dient zum Ausgleichen einer eventuellen Alterung der Lampe.

Ferner ist ein zweiter Leuchtdichtesensor 36 vorgesehen, der so im Strahlengang angeordnet ist, daß er mit Licht beaufschlagt wird, welches durch den Mikrofiche 3 hindurchgegangen ist. Der Leuchtdichtesensor 36 ist mit einer Regeleinrichtung 35 verbunden, deren Ausgang mit der Spannungsversorgung der Lampe 31 verbunden ist. Der Mikrofiche 3 weist an der auf den zweiten Leuchtdichtesensor abzubildenden Stelle ein nichtgeschwärztes Feld auf. Der zweite Leuchtdichtesensor und die anschließende Regelung dient dazu, eine filmindividuelle Nachregelung der Lampe durchzuführen.

**Patentansprüche**

1. Mikrofilmlesegerät mit einem Bildschirm und einer einen zu lesenden Mikrofilm auf dem Bildschirm abbildenden Abbildungseinrichtung und einem mit einem mit einer Datenverarbeitungseinrichtung verbindbaren Decoder verbundenen Scanner zum Erfassen von auf dem Mikrofilm aufgezeichneter Information, dadurch gekennzeichnet, daß der Scanner als Lesestift ausgebildet ist, der die Information auf dem Bildschirm abtastet, daß ein Verstärker (26) zum Verstärken des Ausgangssignales des Lesestiftes (18) in Abhängigkeit von dem Kontrastverhältnis auf dem Bildschirm (16) vorgesehen ist und daß der Lesestift (18) eine Kontrastmeßeinrichtung (30) zum Erfassen des Bildschirmkontrastes und Liefern entsprechender Ausgangssignale an den Verstärker (26) aufweist.

2. Mikrofilmlesegerät nach Anspruch 1, dadurch gekennzeichnet, daß der Lesestift (18) auf verschiedene Farben selektiv ansprechend ausgebildet ist.

3. Mikrofilmlesegerät nach Anspruch 2, dadurch gekennzeichnet, daß in den Strahlengang des Lesestiftes (18) Farbfilter einschaltbar vorgesehen sind.

4. Mikrofilmlesegerät nach Anspruch 2 oder 3, dadurch gekennzeichnet, daß der Lesestift (18) auf infrarot selektiv ansprechend ausgebildet ist.

5. Mikrofilmlesegerät nach einem der Ansprüche 1-4, dadurch gekennzeichnet, daß ein von der Lichtquelle der Abbildungseinrichtung direkt beaufschlagbarer Sensor vorgesehen ist, dessen Ausgang mit einer die Spannungsquelle der Lichtquelle regelnden Regeleinrichtung verbunden ist.

6. Mikrofilmlesegerät nach einem der Ansprüche 1-5, dadurch gekennzeichnet, daß in dem Abbildungsstrahlengang ein dem Mikrofilm nachgeordneter Leuchtdichtesensor vorgesehen ist, dessen Ausgang mit einer die Spannungsquelle für die Lichtquelle der Abbildungseinrichtung regelnden Regeleinrichtung verbunden ist.

7. Mikrofilmlesegerät nach einem der Ansprüche 1-6, dadurch gekennzeichnet, daß die Lichtquelle bzw. die optischen Elemente im Abbildungsstrahlengang zwischen Lichtquelle und Mikrofilm einen Filter aufweisen, der in einem Wellenlängenbereich absorbiert, welcher langwelliger ist als die Wellenlänge der maximalen Empfindlichkeit des Sensorelementes des Scanners.

8. Mikrofilmlesegerät nach einem der Ansprüche 1-7, dadurch gekennzeichnet, daß die Lichtquelle bzw. die optischen Elemente im Abbildungsstrahlengang zwischen Lichtquelle und Mikrofilm einen Filter aufweisen, der in einem Lichtwellenbereich absorbiert, welcher zwischen 0,6 $\mu$m und der maximalen Empfindlichkeit des Lichtsensorelementes im Scanner liegt.

9. Mikrofilmlesegerät nach einem den Ansprüche 1-8, dadurch gekennzeichnet, daß im Abbildungsstrahlengang ein die Lichtquelle abbildender Fokussierspiegel (32) vorgesehen ist, welcher so belegt ist, daß er nur bis zu einem Wellenlängenbereich reflektiert, welcher unmittelbar nach dem optimalen oder auch maximalen Wellenlängen-Ansprechbereich des Leuchtdichtesensors (27) endet.

**Claims**

1. Microfilm reading device comprising a screen and imaging means imaging the microfilm to be read onto said screen, and further comprising a scanner for detection of the information recorded on said microfilm, said scanner being connected to a decoder suited for communication with a data processing system, characterized in that said scanner is configured as a reading pen so as to scan the information on said screen, that an amplifier (26) is provided to amplify the output signal from said reading pen (18) as a function of the contrast ratio on said screen (16), and that said reading pen (18) comprises contrast measuring means (30) to detect the screen contrast and to supply corresponding output signals to said amplifier (26).

2. Microfilm reading device according to Claim 1, characterized in that said reading pen (18) is configured so as to selectively respond to different colours.

3. Microfilm reading device according to Claim 2, characterized in that colour filters are provided for interposition into the optical path of said reading pen (18).

4. Microfilm reading device according to Claim 2 or 3, characterized in that said reading pen (18) is configured so as to selectively respond to infrared light.

5. Microfilm reading device according to any of Claims 1 to 4, characterized in that a sensor is provided for being directly influenced by the light source of said imaging means, the output of said sensor being connected to a regulator controlling the voltage source of said light source.

6. Microfilm reading device according to any of Claims 1 to 5, characterized in that a luminance sensor is provided in said optical imaging path in succession to said microfilm, the output of said sensor being connected to a regulator controlling the voltage source for said light source of said imaging means.

7. Microfilm reading device according to any of Claims 1 to 6, characterized in that said light source or said optical elements, respectively, in the optical imaging path between said light source and said microfilm comprise a filter absorbing in a range of wave lengths longer than the wave length of the maximum selectivity of said sensor element of said scanner.

8. Microfilm reading device according to any of Claims 1 to 7, characterized in that said light source or said optical elements, respectively, in the optical imaging path between said light source and said microfilm comprise a filter absorbing in a light wave range extending from 0.6 µm to the maximum selectivity of said light sensor element in said scanner.

9. Microfilm reading device according to any of Claims 1 to 8, characterized in that a focussing mirror (32) is provided in the optical imaging path for imaging said light source, said mirror being so coated that it reflects only up to a wave length range ending immediately after the optimum or even maximum wave length selectivity range of said luminance sensor (27).

## Revendications

1. Lecteur pour microfilms, comprenant un écran et un dispositif de représentation du microfilm à lire sur ledit écran, et comprenant un scanner relié à un décodeur, approprié à être raccordé à un dispositif de traitement de l'information, afin de détecter l'information enregistrée sur ledit microfilm, caractérisé en ce que ledit scanner est configuré sous forme d'un style de lecture lisant l'information sur ledit écran, qu'un amplificateur (26) est pourvu pour l'amplification du signal de sortie dudit style de lecture (18) en fonction du rapport de contraste sur ledit écran (16), et que ledit style de lecture (18) comprend un système (30) à mesurer le contraste afin de détecter le contraste sur ledit écran et de fournir des signaux de sortie correspondants audit amplificateur (26).

2. Lecteur pour microfilms selon la revendication 1, caractérisé en ce que ledit style de lecture (18) est configuré d'une manière à répondre sélectivement aux couleurs différentes.

3. Lecteur pour microfilms selon la revendication 2, caractérisé en ce que des écrans colorés sont pourvus pour l'interposition dans la marche des rayons dudit style de lecture (18).

4. Lecteur pour microfilms selon la revendication 2 ou 3, caractérisé en ce que ledit style de lecture (18) est configuré à répondre sélectivement à l'infrarouge.

5. Lecteur pour microfilms selon quelconque des revendications 1 à 4, caractérisé en ce qu'un capteur est pourvu qu'est approprié à être alimenté directement par la source lumineuse dudit dispositif de représentation, la sortie dudit capteur étant en communication avec un système à régler la source de tension de ladite source lumineuse.

6. Lecteur pour microfilms selon quelconque des revendications 1 à 5, caractérisé en ce qu'un capteur de luminance est placé dans la marche des rayons, en aval dudit microfilm, la sortie dudit capteur étant en communication avec un système à régler ladite source de tension en alimentation de la source lumineuse dudit dispositif de représentation.

7. Lecteur pour microfilms selon quelconque des revendications 1 à 6, caractérisé en ce que ladite source lumineuse ou les éléments optiques, respectivement, placés dans la marche des rayons de représentation entre ladite source lumineuse et ledit microfilm, comprennent un filtre en absorption au dedans d'une gamme d'ondes ayant une longueur plus grande que la longueur d'ondes correspondantes au maximum de la sélectivité dudit élément capteur du scanner.

8. Lecteur pour microfilms selon quelconque des revendications 1 à 7, caractérisé en ce que la source lumineuse ou les éléments optiques, respectivement, placés dans la marche des rayons de représentation entre la source lumineuse et ledit microfilm, comprennent un filtre en absorption au dedans d'une gamme d'ondes s'étendant de 0.6 µm jusqu'au maximum de la sélectivité dudit élément capteur de la lumière dans ledit scanner.

9. Lecteur pour microfilms selon quelconque des revendications 1 à 8, caractérisé en ce qu'un miroir de concentration (32) est placé dans la marche des rayons de représentation afin de représenter ladite source lumineuse, ledit miroir étant étamé d'une manière à ne réfléchir que jusqu'à une gamme d'ondes se terminant immédiatement à la suite de la gamme d'ondes de la sélectivité optimale ou bien maximale dudit capteur de luminance (27).

Fig. 1

Fig. 2

Fig. 3

Fig. 4